(19) Europäisches Patentamt

European Patent Office

Office européen des brevets

(11) **EP 1 147 072 B1**

(12) **EUROPEAN PATENT SPECIFICATION**

(45) Date of publication and mention
of the grant of the patent:
**17.07.2002 Bulletin 2002/29**

(51) Int Cl.[7]: **C04B 41/49**

(86) International application number:
**PCT/US99/27463**

(21) Application number: **99959042.5**

(22) Date of filing: **19.11.1999**

(87) International publication number:
**WO 00/34207 (15.06.2000 Gazette 2000/24)**

(54) **STABLE AQUEOUS EMULSIONS OF NONPOLAR SILANES HAVING CONSTANT PARTICLE SIZE**

STABILE WÄSSRIGE EMULSIONEN AUS NICHTPOLAREN SILANEN MIT KONSTANTEN TEILCHENGRÖSSEN

EMULSIONS AQUEUSES STABLES DE SILANES NON POLAIRES, A DIMENSION PARTICULAIRE CONSTANTE

(84) Designated Contracting States:
**AT BE CH CY DE DK ES FI FR GB GR IE IT LI LU MC NL PT SE**

(30) Priority: **10.12.1998 US 209516**

(43) Date of publication of application:
**24.10.2001 Bulletin 2001/43**

(73) Proprietor: **DOW CORNING CORPORATION
Auburn, MI 48611 (US)**

(72) Inventors:
• **FISHER, Paul, D.
Midland, MI 48642 (US)**
• **GEE, Ronald, P.
Midland, MI 48640 (US)**

(74) Representative: **Kyle, Diana
Elkington and Fife
Prospect House
8 Pembroke Road
Sevenoaks, Kent TN13 1XR (GB)**

(56) References cited:
**EP-A- 0 631 999        EP-A- 0 832 864
US-A- 4 877 654        US-A- 5 746 810**

## Description

### FIELD OF THE INVENTION

This invention relates to aqueous silane emulsions that can be used in water repellence applications. More particularly, this invention relates to aqueous silane emulsions which do not phase separate with age and that have an average particle size that does not increase significantly with age.

### BACKGROUND OF THE INVENTION

Organosilane and organosilicone compounds dissolved in organic solvents have been used to render masonry and other substrates water repellent in the past. For example, U.S. Patent 3,772,065 to Seiler discloses a method for waterproofing masonry structures. The method comprises impregnating masonry structures with an alcoholic or hydrocarbon solution of hydrolyzed alkyltrialkoxysilanes and their lower oligomers. European Patent 0 075 962 to Pühringer discloses an impregnating agent for porous building materials containing tetraalkoxysilanes, alkyltrialkoxysilanes, or aryltrialkoxysilanes, a surfactant, an aliphatic solvent, and an optional condensation reaction catalyst. U.S. Patent 4,937,104 to Pühringer discloses a process for imparting hydrophobicity to mineral substrates. The process comprises mixing at least one silane, a hydrolysis product of the silane, a condensation product, or combinations thereof, with a surfactant and a water/ organic alcohol mixture. The resulting emulsion is applied to a mineral substrate. However, organic solvents such as alcohols and hydrocarbons are flammable, expensive, and have detrimental environmental and physiological effects.

U.S. Patent No. RE 33,759 to DePasquale et al. discloses an aqueous emulsion containing silanes for rendering masonry surfaces water repellent. The system consists essentially of a hydrolyzable silane, and oligomers thereof; a surfactant having HLB of 4 to 15; and water. The hydrolyzable silane has the formula $R_nSiR'_{(4-n)}$ where n is 1 or 2, R is selected from hydrocarbon and halogenated hydrocarbon groups of 1 to 20 carbon atoms, and R' is selected from alkoxy groups of 1 to 3 carbon atoms, halide groups, amino groups, and carboxyl groups. The surfactant can be nonionic, amphoteric, ionic, or combinations thereof. The preferred surfactants are SPAN® surfactants, which have HLB values in the range of 4.3 to 8.6, and TWEEN® 61 and TWEEN® 81, which have HLB values of 9.6 and 10.0, respectively. However, pH and particle size of the emulsion are not disclosed. Particle size change with time is not disclosed.

U.S. Patent No's. 4,877,654, and 4,990,377. both to Wilson et al., disclose aqueous emulsions for rendering porous substrates water repellent. The emulsion comprises a hydrolyzable silane, an emulsifier with HLB of 1.5 to 20, a buffer, and water. The silane has formula $R_nSiR'_{4-n}$, where R is selected from hydrocarbon- and halogenated hydrocarbon groups of 1 to 30 carbon atoms; n is 1 or 2, and R' is an alkoxy group of 1 to 6 carbon atoms, a halide group, an amino group, or a carboxyl group. Nonionic, cationic, anionic, and amphoteric emulsifiers are suitable. The emulsion has a pH of 6-8. However, stability and particle size of the emulsion are not disclosed. Particle size change with time of the emulsion is not disclosed.

U.S. Patent No. 5,226,954 to Suzuki, discloses an organosilicon composition comprising a monoalkyltrialkoxysilane and/or a condensate thereof, an emulsifier mixture of an anionic emulsifier and a nonionic emulsifier, and water. The composition undergoes emulsification to form an emulsion. 'Emulsification' as defined therein is achieved when the alkylalkoxysilane and the emulsifier are mixed and the resulting upper layer is opaque and further where a small amount of water separates to form a lower layer that is more transparent than the upper layer. Suzuki '954 does not disclose particle size of the emulsion. Suzuki '954 does not disclose particle size increase over time.

U.S. Patent No. 5,746,810 to Suzuki discloses an aqueous emulsion of an alkylalkoxysilane, a surfactant, and water. Suzuki '810 discloses that the emulsion is stable and has particle diameter in the range of 2 to 10 micrometers. Suzuki '810 defines 'stable' to mean that after storage, some separation into an opaque layer of silane concentrated emulsion and a colorless transparent layer of water is acceptable when the material can easily be reemulsified. The emulsion has a pH of 7.5-9.

United Kingdom Publication GB 2 301 102 A to Toagosei Co., Ltd., discloses an aqueous emulsion prepared by hydrolyzing a silane selected from the group consisting of alkoxysilanes and alkylhalogensilanes by heating in the presence of an acid catalyst and a small amount of water to form a mixture of the silane and its oligomer, and subsequently emulsifying the mixture with water and an emulsifier. The alkoxysilane has the formula $R_nSiR'_{4-n}$, where R is selected from alkyl groups, substituted alkyl groups, and aryl groups; n is 1 or 2, and R' is an alkoxy group of 1 to 6 carbon atoms. The emulsifier can be nonionic, anionic, or cationic. The particle size of the emulsion is 1 micrometer or smaller. Emulsions with particle size larger than 1 micrometer tend to be unstable and liable to phase separation.

U.S. Patent No. 5,458,923 and U.S. Patent No. 5,314,533, both to Goebel et al., disclose aqueous emulsions of organosilicon compounds. The emulsion comprise an alkoxysilane, an ionic surfactant, an organosilicon surfactant, and water. The emulsion is stable for weeks at pH 6 to 9. 'Stable' is defined as 1. an emulsion having no phase separation and no formation of a layer of cream, or 2. an emulsion that can be reobtained by simple stirring with no loss of effects if a layer of cream does occur.

However, none of these patents address the problem of particle size increase with time. This is generally due to a process known as Ostwald Ripening in which the low molecular weight emulsified silane compound has a sufficient solubility in water such that it diffuses from smaller particles through the aqueous phase into larger particles. This results in a net increase in average particle size of the emulsion with time. This can lead to inconsistent behavior or performance of the emulsion in commercial use due to changing properties of the emulsion with age.

Additionally, when an alkoxysilane is used as the silane compound in the emulsion, over time the alkoxysilane can react when it contacts the water phase. The alkoxysilane can undergo hydrolysis and condensation, thereby forming a siloxane and liberating alcohol, which can break the emulsion.

Therefore, an object of this invention is to provide a means to prevent, or minimize, increasing emulsion particle size with age; producing stable emulsions of low molecular weight silanes. "Low molecular weight" means a molecular weight (MW) less than 1000. Another object of this invention is to provide a means to prevent, or minimize, increasing particle size with age of emulsions of water soluble silanes.

Particles of increasing size will cream up more rapidly, in accordance with Stokes Law for the rate of creaming of particles in an emulsion. Conversely, if the particles are sufficiently small, the velocity of random particle movement due to Brownian Motion will be sufficient to prevent creaming. The use of additives in the silane compound phase or water phase to decrease the density difference between the silane compound and water to near zero is one technique to minimize creaming. However. this is often undesirable, as it adds to the manufacturing cost of an emulsion and may have detrimental effects on the use of the emulsion in some applications. To reduce creaming, one may also increase the viscosity of the aqueous phase with thickeners such as alginates, as disclosed in U.S. Patent No. 5,746,810, or with the use of large amounts of emulsifiers relative to the amount of interfacial surface area between the oil particles and the water phase. The use of such large amounts of emulsifier results in the formation of emulsifier structures such as liquid crystals on the particle surface and in the water phase which produces a viscous aqueous phase. Use of excessive amounts of emulsifiers is generally detrimental to the water repellency properties provided by silane emulsions.

Therefore, it is a further object of this invention to produce emulsions of silanes having sufficiently small particle size such that they do not exhibit significant creaming and remain essentially stable in uniformity of silane concentration with age. To this end it is an object of this invention to provide emulsions having average particle size less than 10 microns.

An emulsion will not change in uniformity due to creaming if the emulsion is so concentrated in dispersed oil particles that it is already a cream from top to bottom of the container. The maximum packing of rigid spheres of the same diameter is 74% by volume. Accordingly, as the concentration of silane phase in a polydisperse particle size emulsion approaches or exceeds this concentration, the emulsion becomes quite viscous and unlikely to exhibit non-uniformity due to creaming, as it is already essentially in a creamed state. Due to the viscous, paste-like nature of such emulsions, they arc difficult to pump or handle in commercial use.

Therefore, it is a further object of this invention to provide stable and uniform silane emulsions that have low viscosity for ease of handling. The emulsions of this invention have silane concentrations of approximately 65% or less by weight and are easily handled such as by pouring or pumping due to their low viscosity.

## SUMMARY OF THE INVENTION

This invention relates to an aqueous silane emulsion and a method for its preparation. The emulsion comprises an alkoxysilane, an emulsifier system of at least two emulsifiers, and water. One emulsifier is the primary emulsifier, and it is selected from the group consisting of anionic, cationic, and amphoteric emulsifiers. The second emulsifier is a nonionic cosurfactant, and it has an HLB value of less than 11. The emulsion has improved stability in that the emulsion of alkoxysilanes exhibits no phase separation with age. The emulsion has uniformity in that the discontinuous phase exhibits no, or minimal, increase in particle size with age.

## DETAILED DESCRIPTION OF THE INVENTION

The aqueous silanc emulsions of the present invention are stable and have constant particle size. "Stable" means that the emulsion does not phase separate into a water layer and a silane (oil) layer with age. "Constant" means that the particle size of the emulsion does not increase significantly with age. Preferably, particle size does not increase by more than 10% after the emulsion is stored at about 25°C for at least 14 days. These emulsions are easily handled such as by pouring or pumping due to their low viscosity. Typically, viscosity of the emulsion is not greater than about 5 sq mm/s. Typically, viscosity of the emulsion is not greater than about 5 sq mm/s. However, at silane concentrations greter than 50%, emulsion viscosity will be greater than 5, and may be as high as 1,000 sq mm/s. Emulsions with viscosity in the range of 5 to 1,000 sq mm/s are easily poured and pumped.

The aqueous silane emulsion comprises:

A) a continuous phase comprising water;
B) a discontinuous phase comprising at least 1 nonpolar silane, wherein the discontinuous phase forms particles dispersed in the continuous phase; and
C) an emulsifier system consisting essentially of

(i) a primary surfactant, and
(ii) a cosurfactant.

This emulsion has the advantage that even a low molecular weight silane can be emulsified to form a stable emulsion with constant particle size. However, it is not meant that this invention is limited to low molecular weight nonpolar silanes. This emulsion can contain nonpolar silanes having molecular weights greater than 1,000. 'Nonpolar silane' means that at least one nonpolar organofunctional group is bonded to the silicon atom.

The nonpolar silane is preferably a nonpolar alkoxysilane. Typically, the amount of nonpolar alkoxysilane is 1 to 65 wt% of the emulsion. Preferably, the amount of nonpolar alkoxysilane is from 10 to 60 wt%, however, concentrations as low as 5 to 10 wt% are suitable for some applications. Suitable nonpolar alkoxysilanes have the general formula $R_nSiR'_{4-n}$, where each R is independently a monovalent hydrocarbon group, R' is an alkoxy group of 1 to 10 carbon atoms, and n is 1 or 2. R is preferably independently selected from the group consisting of alkyl, halogenated alkyl, aryl and substituted aryl groups. When the emulsion will be used in water repellence applications, preferably R is independently an alkyl group of 8 to 20 carbon atoms and R' has 1 to 6 carbon atoms. However, alkyl groups R having 1 to 7 carbon atoms are also suitable for use in this emulsion.

Suitable alkylalkoxysilanes and halogenated alkylalkoxysilanes for component (B) are exemplified by those disclosed by U.S. Patent RE 33,759 to DePasquale et al., which is hereby incorporated by reference for the purpose of disclosing suitable alkoxysilanes. Preferably, the alkylalkoxysilane is selected from the group consisting of isobutyltriethoxysilane, isobutyltrimethoxysilane, n-octyltriethoxysilane, and n-octyltrimethoxysilane. Suitable halogenated alkylalkoxysilanes include 3,3,3-trifluropropyl trimethoxysilane and 6,6,6-trifluorohexyl trimethoxysilane.

However, this emulsion is advantageous over the emulsion disclosed by DePasquale et al. because high purity silanes can be emulsified to form stable emulsions having constant particle size. The high purity silanes typically contain about 5 wt% or less of impurities. "Impurity" means any dimer, trimer, or oligomer of the silane; and includes any other siloxane polymer or high molecular weight oil present in the silane.

The emulsion of this invention can be produced with a particle size less than 10 micrometers. Preferably, particle size is less than 1 micrometer, and more preferably, particle size is less than 0.5 micrometers.

The emulsifier system inhibits particle size increase with age. The emulsifier system comprises a primary surfactant and a cosurfactant. The primary surfactant prevents coalescence of the particles by ionic repulsion between particles. The cosurfactant prevents diffusion of the silane out of the particle, which could result in Ostwald Ripening.

The amounts of each surfactant in the emulsifier system are sufficient to provide an outer mixed monolayer that contacts the water phase and a second inner monolayer of essentially water insoluble cosurfactant. The mixed monolayer is a combination of both surfactants. This provides a barrier that prevents diffusion of the silane into the water phase. The surfactant bilayer provides a significant barrier to retard or prevent diffusion of the silane out of the particle.

The primary surfactant is selected from the group consisting of anionic, cationic, and amphoteric type emulsifiers. The primary surfactant must be present in the emulsion at a concentration of 0.5 to 3 molecules per 100 square Angstroms of surface area of the silane particles. However, the exact amount of primary surfactant depends on the type of surfactant chosen and, for very dilute emulsions having relatively large particle size where the concentration of primary surfactant becomes low by these constraints, it may be necessary to increase this amount by the critical micelle concentration (CMC) of the emulsifier to adjust for the amount that would be dissolved in the water phase.

Anionic surfactants suitable for use as the primary surfactant include sulfonic acid salt derivatives. Suitable anionic surfactants are exemplified by alkali metal sulfosuccinates; sulfonated glyceryl esters of fatty acids such as sulfonated monoglycerides of coconut oil acids; salts of sulfonated monovalent alcohol esters such as sodium oleyl isothionate; amides of amino sulfonic acids such as the sodium salt of oleyl isothionate; amides of amino sulfonic acids such as the sodium salt of oleyl methyl tauride; sulfonated products of fatty acid nitriles such as palmitonitrile sulfonate; sulfonated aromatic hydrocarbons such as sodium alpha-naphthalene monosulfonate; condensation products of naphthalene sulfonic acids with formaldehyde, sodium octahydro anthracene sulfonate; alkali metal alkyl sulfates; ether sulfates having alkyl groups of 8 or more carbon atoms; and alkylaryl sulfonates having one or more alkyl groups of 8 or more carbon atoms.

Anionic surfactants are known in the art and are commercially available. For example, suitable anionic surfactants include BIO-SOFT® N-300, a triethanolamine linear alkyl sulfonate available from Stepan Company, Northfield, Illinois; SIPONATE® DS-10, a sodium salt of dodecylbenzene sulfonic acid available from Alcolac Inc., Baltimore, Maryland; and DOWFAX® 8390, a sodium n-hexadecyl diphenyloxide disulfonate, available from the Dow Chemical Company, Midland, Michigan.

Cationic surfactants suitable for use as the primary surfactant are typically fatty acid amines, amides, and derivatives and salts of fatty acid amines and amides. Suitable cationic surfactants include aliphatic fatty amines and derivatives such as dodecyl amine acetate, octadecyl amine acetate, and acetates of amines of tallow fatty acids; homologues of aromatic amines having fatty chains such as dodecyl aniline; fatty amides derived from aliphatic diamines such as undecyl imidazoline; fatty amides derived from di-substituted such as oleylamino diethylamine; derivatives of ethylene diamine; quaternary ammonium compounds such as tallow trimethyl ammonium chloride, dioctadecyldimethyl ammonium chloride, didodecyldimethyl ammonium chloride, and dihexadecyldimethyl ammonium chloride; amide derivatives of amino alcohols such as beta-hydroxyethyl stearyl amide; amine salts of long chain fatty acids; quaternary ammonium bases derived from fatty amides of di-substituted diamines such as oleylbenzylamino ethylene diethylamine hydrochloride; quaternary ammonium bases of benzimidazolines such as methyl heptadecyl benzimidazole hydrobromide; basic compounds of pyridinium and derivatives such as cetylpyridinium chloride; sulfonium compounds such as octadecyl chloromethyl ether; urethanes of ethylene diamine such as condensation products of stearic acid and diethylene triamine; polyethylene diamines; and polypropanol polyethanol amines.

Suitable cationic surfactants are commercially available. Suitable cationic surfactants include ARQUAD® T-27W, 16-29, C-33, T-50 AND ETHOQUAD® T/13 and T/13 ACETATE, available from Akzo Chemicals Inc., Chicago, Illinois.

Amphoteric surfactants suitable for use as the primary surfactant include cocoamphocarboxyglycinate, cocoamphocarboxypropionate, cocobetaine, N-cocamidopropyldimethylglycine, and N-lauryl-N-carboxymethyl-N-(2-hydroxyethyl)ethylenediamine, quaternary cycloimidates, betaines, and sultaines.

Amphoteric surfactants that are commercially available include MIRATAINE® and MIRANOL® available from Rhone-Poulenc Incorporated, Cranberry, New Jersey; and TEGO® BETAINE available from Goldschmidt Chemical Corporation, Hopewell, Virginia.

The cosurfactant must have an HLB less than 11. Examples of some suitable cosurfactants and their HLB values include: ALDO® MS (3.8-3.9), which is glycerol monostearate, and LONZEST® GMO (3.0), which is an ethoxylated fatty ester, both of which are produced by Lonza Inc., Fairlawn, New Jersey; S-MAZ® 60K (4.7), which is a sorbitan monostearate available from PPG Industries, Gurnee, Illinois; ARLACEL® 60 (4.7), which is a sorbitan stearate available from ICI Americas Inc., Wilmington, Delaware: oleates such as sorbitan monooleate (4.3), sorbitan trioleate (1.8), polyoxyethylene sorbitan monooleate (10.0); ALDO PGHMS® (3.0), which is propylene glycol monostearate available from Lonza Inc., Fairlawn, New Jersey; MAPEG® EGMS (2.9), which is ethylene glycol monostearate available from PPG/ Mazer Gurnee, Illinois; HODAG® DGS (4.7), which is diethylene glycol monostearate; ETHOX® SAM-2 (4.9), which is a polyoxyethylene stearyl amine available from Ethox Chemicals Inc., Greenville, South Carolina; MACOL® SA-2 (4.9), which is a polyoxyethylene stearyl ester available from PPG/ MAZER. Gurnee, Illinois; and polyoxyethylene ethers such as BRIJ® 72 (4.9), which is a polyoxyethylene lauryl ether and BRIJ® 52 (4.9), which is a polyoxyethylene cetyl ether, both of which are available from ICI Americas Inc.; SPAN® 20 (8.6), which is a sorbitan monolaurate available from ICI Surfactants; and CALGENE® GML (3.0), which is glycerol monolaurate available from Calgene Chemical, Inc.

Sorbitan fatty acid esters having HLB values in the range of 4.3 to 8.6 and polyoxyethylene sorbitan fatty acid esters having HLB values in the range of 9.6 to 10 are preferred nonionic cosurfactants. The preferred sorbitan fatty acid esters having HLB values in the range of 4.3 to 8.6 are available commercially under the tradename SPAN®, produced by ICI Americas. SPAN® 20, a sorbitan monolaurate, has HLB of 8.6, SPAN® 40 has HLB of 6.7, SPAN® 60, a sorbitan monostearate, has HLB 4.7, and SPAN® 80 has HLB of 4.3. SPAN® 20 is particularly preferred. Polyoxyethylene sorbitan fatty acid esters having HLB values in the range of 9.6 to 10.0 are commercially available under the tradename TWEEN®, produced by ICI Americas. Particularly preferred are TWEEN® 61, which has HLB of 9.6; and TWEEN® 81 which has HLB of 10.0.

The concentration of cosurfactant in the emulsion is 1.5 to 15, preferably 4 to 15, molecules per 100 square Angstroms of surface area of the silane particles. Higher amounts of cosurfactant are unnecessary and may lead to emulsion instability. Emulsion particle sizes cited are "intensity" weighted diameters as measured by dynamic light scattering (photon correlation spectroscopy). A NICOMP® Particle Sizer instrument was used.

The balance, up to 100%, of the aqueous silane emulsion comprises water and any optional components. Typically, the amount of water in the emulsion is 30 to 99 weight percent. The aqueous silane emulsion may further comprise one or more of the following optional components: (D) a buffer, (E) a biocide, (F) a thickener, (G) a fragrance, (H) a colorant, (I) a foaming agent, (J) an anti-foaming agent, and (K) a rust inhibitor.

Component (D) is an optional buffer used to maintain the pH of the aqueous silane emulsion in a desired range. Buffers are typically organic and inorganic acids and bases, including salts thereof. The amount of buffer added to the emulsion is typically 0.01 to 5 wt%. Suitable buffers are disclosed in U.S. Patent No. 4,877,654, which is hereby incorporated by reference for the purpose of describing suitable buffers. When the emulsion will be used in water repellence applications, the buffer is preferably selected from the group consisting of sodium bicarbonate, sodium benzoate, disodium hydrogen phosphate, and a mixture of ammonium hydroxide and acetic acid. A buffer is preferably added to the emulsion when a biocide is present, or when pH of the emulsion is outside the range of 6 to 9.

Component (E) is an optional biocide typically added in an amount of 0.1 to 5 wt% of the emulsion. Biocides are known in the art and are commercially available. For example, 6-acetoxy-2,4-dimethyl-m-dioxane (GIV-GARD DXN®) sold by Guvaudan Corp. is suitable for this invention. Suitable biocides are disclosed in U.S. Patent No. 4,877,654, which is hereby incorporated by reference for the purpose of describing suitable biocides.

Component (F) is an optional thickener that moderately increases the viscosity of the aqueous phase. Component (F) may be used to prevent creaming of the larger particle size emulsions in this range. The thickener must not affect the stability and particle size of the emulsion. Suitable thickeners are exemplified by water soluble polymers such as polyacrylic acid and polyacrylic acid salts, alginic acid salt, alginic acid ester, polyvinyl alcohol, polyether, casein, mannan, starch, chitosan, carboxymethylcellulose, and methoxymethyl cellulose. U.S. Patent 5,746,810 is hereby incorporated by reference for the purpose of describing suitable thickeners. Thickeners are typically added in an amount of 0.1 to 1 wt% of the emulsion.

Component (G) is an optional fragrance. Component (H) is an optional colorant. The colorant can be water based, or it can be an oil-soluble dye. Component (I) is an optional foaming agent. Component (J) is an optional anti-foaming agent. Component (K) is an optional rust inhibitor. Component (K) is, for example, sodium benzoate.

The emulsion of this invention can be used in a wide variety of applications, including water repellence applications. This invention further relates to a method for rendering substrates water repellent. The method comprises impregnating the substrate with the aqueous alkoxysilane emulsion, and hydrolyzing and condensing the alkoxysilane. The substrate can be wood, but is preferably masonry. 'Masonry' means any porous inorganic substrate, such as building materials. Masonry includes structural ceramics, cements, insulation products, stone, sheet rock, and concrete. Suitable substrates are disclosed in U.S. Patent 4,877,654, hereby incorporated by reference for the purpose of describing suitable substrates. The method for impregnating the substrate with the aqueous alkoxysilane emulsion is not critical. For example, the emulsion can be applied to a surface of the substrate by brush coating, roller coating, or spraying, Alternatively, the aqueous alkoxysilane emulsion can be mixed with a composition, such as uncured concrete, and thereafter the composition can be cured to form a substrate having water repellency. The amount of emulsion impregnated in the substrate depends on the porosity and surface conditions of the substrate but is typically in the range of 0.05 to 2.0 Kg/sq m.

This invention further relates to a method for preparing the emulsion of the present invention. The method comprises:

emulsifying a composition comprising

A) water;
B) at least 1 alkoxysilane, wherein the alkoxysilane forms a discontinuous phase of particles dispersed in the water; and
C) an emulsifier system consisting essentially of

(i) a primary surfactant, wherein the primary surfactant is a nonionic emulsifier having an HLB greater than 13, and wherein the primary surfactant is present in the emulsion at a concentration of 0.5 to 3 molecules per 100 square Angstrom of surface area of the particles and
(ii) a cosurfactant, wherein the cosurfactant is a nonionic emulsifier having an HLB less than 11, and wherein the cosurfactant is present in the emulsion at a concentration sufficient to provide 1.5 to 15 molecules per 100 square Angstroms of surface area of the particles.

The emulsion can be made with a desired particle size of the discontinuous phase (i.e., less than 0.5 micrometers) to get the correct range of surfactant coverage on the particles. Particle size can be varied by changing shearing conditions such as sonolation pressure during emulsification. For example, if the particle size and surface coverage is too large, increasing shear or increasing sonolation pressure can be performed to decrease particle size. If particle surface coverage is too low, i.e., because particle size is too small, the shearing intensity can be decreased, additional cosurfactant can be added, or both, as needed. One skilled in the art would know how to adjust particle size by changing shearing conditions.

**EXAMPLES**

These examples are intended to illustrate the invention to those skilled in the art and should not be interpreted as limiting the scope of the invention set forth in the claims. All percentages in these examples are weight percentages, unless otherwise indicated. For purposes of these examples, 'n-Otes' means n-octyltriethoxysilane. The surfactants used are shown by tradename in this example. BIOSOFT® N-300 is a triethanolamine linear alkyl sulfonate, an anionic surfactant. SPAN® 20 is sorbitan monolaurate with HLB of 8.6.

The equation used to calculate gamma ($\Gamma$), which is number of surfactant molecules per 100 square Angstroms of particle surface area, is shown below:

$$\Gamma = \% \ S \times D \div (9.96 \times 10^{-3} \times M \times \% \ silane),$$

where S is the weight percent of the emulsifier in the emulsion, D is the initial particle size (diameter) of the silane particles in nanometers, and M is the molecular weight of the emulsifier.

Reference Example 1

An emulsion of a silane was prepared by mixing 12 parts water with the primary surfactant until the primary surfactant was completely mixed with the water. Then 40 parts of the silane were mixed with the cosurfactant and added to the above water mixture. The resulting mixture was stirred at 2000 RPM with a 3.8 cm (1.5 inch) diameter Cowls blade for 30 minutes. After 30 minutes an additional 58.3 parts water was added and the resulting mixture was processed through a 2 stage homogenizer at 51.71/10.34 MPa (7500/1500 psi). After homogenizing the mixture, 0.001 parts of sodium bicarbonate was added to the mixture to maintain a pH of approximately 7.0.

The initial particle size of the resulting emulsion was measured by a NICOMP® particle size analyzer. Particle size is reported in nanometers, unless otherwise indicated below. Based on the amount of primary surfactant added and the initial particle size, a coverage of primary surfactant per 100 square Angstroms of particle size was generated according to the formula above. Similarly, based on the amount of cosurfactant and the initial particle size, a coverage of cosurfactant per 100 square Angstroms of particle size was generated according to the forumula above.

The particle size of the emulsion was measured after storage at room temperature. When a clear water layer was visually observed on the bottom of the emulsion, the emulsion was deemed to have failed stability.

Table 1 shows the primary surfactant and the amount used, the cosurfactant and the amount used, the silane used, and the amount of water used. Table 2 shows the coverage of primary surfactant and cosurfactant and the particle size measured over time for each sample, until the sample failed stability.

Example 1

Sample 1 was an emulsion of N-octyltriethoxysilane was prepared by the method of Reference Example 1. The primary surfactant, sodium laural sulfate, is an anionic surfactant present at 2.8 molecules per 100 square Angstroms of particle surface area. The cosurfactant, SPAN® 20 is a nonionic surfactant, which is a sorbitan monolaureate, having an HLB value of 8.6.

Sample 1 was tested for particle size by the method in Reference Example 1. Example 1 shows that stable emulsions of constant particle size can be produced using an ionic primary surfactant with a nonionic cosurfactant having HLB less than 11.

Example 2

Sample 2 was an emulsion of N-octyltriethoxysilane was prepared by the method of Reference Example 1. The primary surfactant is BIOSOFT® N-300, a triethanolamine linear alkyl sulfonate, which is an anionic surfactant. The cosurfactant, SPAN® 20 is a nonionic surfactant, which is a sorbitan monolaureate, having an HLB value of 8.6.

Sample 2 was tested for particle size by the method in Reference Example 1. Example 2 shows that stable emulsions of constant particle size can be produced using an different ionic primary surfactants with a nonionic cosurfactant having HLB less than 11.

Table 1

| Examples: Sample Formulations | | | | |
|---|---|---|---|---|
| | Sample 1 | | Sample 2 | |
| Silane | n-Otes | 40.00% | n-Otes | 40.00% |
| Primary Surfactant | Sodium Laural Sulfate | 1.00% | BIOSOFT® N-300 | 1.00% |
| Co-Surfactant | SPAN® 20 | 2.00% | SPAN® 20 | 2.00% |
| Water | | 57.00% | | 57.00% |

Table 2:

| Particle Size and Stability | | | | | | |
|---|---|---|---|---|---|---|
| Sample Number | $\Gamma$ Primary Surfactant | $\Gamma$ Cosurfactant | Initial Particle Size | 24 hr Particle Size | 4 day Particle Size | 13 day Particle Size |
| 1 | 2.8 | 1.7 | 316 | 328 | 306 | 414 |
| 2 | 4.6 | 4.7 | 321 | 320 | 308 | 309 |

**Claims**

1. An aqueous emulsion comprising:

   A) a continuous phase comprising water;
   B) a discontinuous phase comprising at least one nonpolar alkoxysilane having at least one nonpolar organofunctional group bonded to a silicon atom, wherein the discontinuous phase forms particles in the continuous phase; and
   C) an emulsifier system consisting essentially of

   (i) a primary surfactant selected from anionic emulsifiers, cationic emulsifiers and amphoteric emulsifiers, wherein the primary surfactant is present in the emulsion at a concentration sufficient to provide 0.5 to 3 molecules of primary surfactant per 100 square Angstroms of surface area of the particles; and
   (ii) a cosurfactant, wherein the cosurfactant is a nonionic emulsifier having an HLB less than 11, and wherein the cosurfactant is present in the emulsion at a concentration sufficient to provide 1.5 to 15 molecules per 100 square Angstroms of surfactant area of the particles.

2. The emulsion according to claim 1, wherein the nonpolar alkoxysilane is present from 1 to 65 wt% of the emulsion.

3. The emulsion according to claim 1 or 2, wherein the nonpolar alkoxysilane has a molecular weight of less than 1,000.

4. The emulsion according to any of claims 1 to 3, wherein the nonpolar alkoxysilane has general formula $R_nSiR'_{4-n}$, wherein each R is independently an alkyl, halogenated alkyl, aryl or a substituted aryl group, R' is an alkoxy group of 1 to 10 carbon atoms, and n is 1 or 2.

5. The emulsion according to claim 4, wherein R is independently an alkyl group of 8 to 20 carbon atoms.

6. The emulsion according to claim 4, wherein R is independently an alkyl group of 1 to 7 carbon atoms.

7. The emulsion according to any of claims 1 to 6, wherein the primary surfactant is an anionic triethanolamine linear alkyl sulfonate.

8. The emulsion according to any of claims 1 to 7, wherein the cosurfactant has an HLB value less than 9.

9. The emulsion according to any of claims 1 to 8, wherein the concentration of the cosurfactant is sufficient to provide 4 to 15 molecules of cosurfactant per 100 square Angstroms of surface area of the particles.

10. The emulsion according to any of claims 1 to 9, wherein the particles have an average diameter of less than 10 micrometers.

11. The emulsion according to claim 10, wherein the average diameter is less than 1 micrometer.,

12. The emulsion according to any of claims 1 to 11, further comprising one or more optional components selected from (D) a buffer, (E) a biocide, (F) a thickener, (G) a fragrance, (H) a colorant, (I) a foaming agent, (J) an anti-foaming agent, and (K) a rust inhibitor.

13. The emulsion according to claim 12, wherein the buffer is an organic or inorganic acid or base or a salt of an organic or inorganic base.

14. The emulsion according to claim 12 or 13, wherein the biocide is present from 0.1 to 5 wt% of the emulsion.

15. The emulsion according to any of claims 12 to 14, wherein the thickener is polyacrylic acid, polyacrylic acid salt, alginic acid salt, alginic acid ester, polyvinyl alcohol, polyether, casein, mannan, starch, chitosan, carboxymethylcellulose or methoxymethyl cellulose.

16. The emulsion according to any of claims 12 to 15, wherein the colorant is a water based colorant and oil-soluble dyes.

17. The emulsion according to any of claims 12 to 16, wherein the rust inhibitor is sodium benzoate.

18. A method comprising:

(I) emulsifying a composition comprising

A) a continuous phase comprising water;
B) a discontinuous phase comprising at least one nonpolar alkoxysilane having at least one nonpolar organofunctional group bonded to a silicon atom, wherein the discontinuous phase forms particles dispersed in the continuous phase; and
C) an emulsifier system consisting essentially of

(i) a primary surfactant, wherein the primary surfactant is selected from the group consisting of anionic surfactants, cationic surfactants, amphoteric surfactants, and combinations thereof, and wherein the primary surfactant is present in the emulsion at a concentration of 0.5 to 3 molecules per 100 square Angstrom of surface area of the particles, and
(ii) a cosurfactant, wherein the cosurfactant is a nonionic emulsifier having an HLB less than 11, and wherein the cosurfactant is present in the emulsion at a concentration sufficient to provide 1.5 to 15 molecules per 100 square Angstroms of surface area of the particles; and

(II) forming an adsorbed inner layer consisting essentially of the cosurfactant between the discontinuous phase and an outer layer consisting essentially of a combination of the primary surfactant and the cosurfactant, wherein the combination contacts the aqueous phase.

19. The method according to claim 18, wherein the concentration of cosurfactant is 4 to 15 molecules per 100 square Angstroms of particle size, thereby minimizing size increase of the particles such that the particles do not increase in size by more than 10% after the emulsion is stored at about 25°C for at least 14 days.

**Patentansprüche**

1. Wässrige Emulsion enthaltend:

A) eine kontinuierliche wasserhaltige Phase;

B) eine diskontinuierliche Phase, die mindestens ein nichtpolares Alkoxysilan mit mindestens einer nichtpolaren organofunktionellen Gruppe, die an ein Siliciumatom gebunden ist, enthält, wobei die diskontinuierliche Phase Teilchen in der kontinuierliche Phase ausbildet; und

C) ein Emulgatorsystem, das im wesentlichen aus

(i) einer primären oberflächenaktiven Substanz, ausgewählt aus anionischen Emulgatoren, kationischen Emulgatoren und amphoteren Emulgatoren, wobei die primäre oberflächenaktive Substanz in der Emulsion in einer Konzentration vorliegt, die ausreichend ist, um 0,5 bis 3 Moleküle primäre oberflächenaktive Substanz pro 100 $Å^2$ Oberfläche der Teilchen zur Verfügung zu stellen; und

(ii) einer sekundären oberflächenaktiven Substanz, wobei die sekundäre oberflächenaktive Substanz ein nichtionischer Emulgator mit einem HLB von weniger als 11 ist und die sekundäre oberflächenaktive Substanz in der Emulsion in einer Konzentration vorliegt, die ausreichend ist, um 1,5 bis 15 Moleküle pro 100 $Å^2$ Oberfläche der Teilchen zur Verfügung zu stellen,

besteht.

2. Emulsion nach Anspruch 1, wobei das nichtpolare Alkoxysilan zu 1 bis 65 Gew.-% der Emulsion vorhanden ist.

3. Emulsion nach Anspruch 1 oder 2, wobei das nichtpolare Alkoxysilan ein Molekulargewicht von weniger als 1.000 aufweist.

4. Emulsion nach einem der Ansprüche 1 bis 3, worin das nichtpolare Alkoxysilan die allgemeine Formel $R_nSiR'_{4-n}$ aufweist, wobei jedes R unabhängig voneinander eine Alkyl-, halogenierte Alkyl-, Aryloder substituierte Arylgruppe ist, R' eine Alkoxygruppe mit 1 bis 10 Kohlenstoffatomen ist und n gleich 1 oder 2 ist.

5. Emulsion nach Anspruch 4. worin R unabhängig voneinander eine Alkylgruppe mit 8 bis 20 Kohlenstoffatomen ist.

6. Emulsion nach Anspruch 4, worin R unabhängig voneinander eine Alkylgruppe mit 1 bis 7 Kohlenstoffatomen ist.

7. Emulsion nach einem der Ansprüche 1 bis 6, worin die primäre oberflächenaktive Substanz ein anionisches lineares Triethanolaminalkylsulfonat ist.

8. Emulsion nach einem der Ansprüche 1 bis 7, worin die sekundäre oberflächenaktive Substanz einen HLB-Wert von weniger als 9 aufweist.

9. Emulsion nach einem der Ansprüche 1 bis 8, worin die Konzentration der sekundären oberflächenaktiven Substanz ausreicht, um 4 bis 15 Moleküle sekundäre oberflächenaktive Substanz pro 100 $Å^2$ Oberfläche der Teilchen zur Verfügung zu stellen.

10. Emulsion nach einem der Ansprüche 1 bis 9, worin die Teilchen einen durchschnittlichen Durchmesser von weniger als 10 µm aufweisen.

11. Emulsion nach Anspruch 10, worin der durchschnittliche Durchmesser weniger als 1 µm beträgt.

12. Emulsion nach einem der Ansprüche 1 bis 11, die weiterhin eine oder mehrere fakultative Komponenten, ausgewählt aus (D) einem Puffer, (E) einem Biozid, (F) einem Verdickungsmittel, (G) einem Duftstoff, (H) einem Farbstoff, (I) einem Schaumbildner, (J) einem Schaumverhütungsmittel und (K) einem Rostschutzmittel, enthält.

13. Emulsion nach Anspruch 12, worin der Puffer eine organische oder anorganische Säure oder Base oder ein Salz einer organischen oder anorganischen Base ist.

14. Emulsion nach Anspruch 12 oder 13, worin das Biozid zu 0,1 bis 5 Gew.-% der Emulsion vorhanden ist.

15. Emulsion nach einem der Ansprüche 12 bis 14, worin das Verdickungsmittel Polyacrylsäure, Polyacrylsäuresalz, Alginsäuresalz, Alginsäureester, Polyvinylalkohol, Polyether, Casein, Mannan, Stärke, Chitosan, Carboxymethylcellulose oder Methoxymethylcellulose ist.

16. Emulsion nach einem der Ansprüche 12 bis 15, worin der Farbstoff ein Farbstoff auf Wasserbasis oder ein öllöslicher Farbstoff ist.

**17.** Emulsion nach einem der Ansprüche 12 bis 16, worin das Rostschutzmittel Natriumbenzoat ist.

**18.** Verfahren umfassend:

(I) Emulgieren einer Zusammensetzung enthaltend:

A) eine kontinuierliche wasserhaltige Phase;
B) eine diskontinuierliche Phase, die mindestens ein nichtpolares Alkoxysilan mit mindestens einer nichtpolaren organofunktionellen Gruppe, die an ein Siliciumatom gebunden ist, enthält, wobei die diskontinuierliche Phase Teilchen ausbildet, die in der kontinuierlichen Phase dispergiert sind;
C) ein Emulgatorsystem, das im wesentlichen aus

(i) einer primären oberflächenaktiven Substanz, wobei die primäre oberflächenaktive Substanz ausgewählt ist aus der Gruppe bestehend aus anionischen oberflächenaktiven Substanzen, kationischen oberflächenaktiven Substanzen, amphoteren oberflächenaktiven Substanzen und Kombination davon und wobei die primäre oberflächenaktive Substanz in der Emulsion in einer Konzentration von 0,5 bis 3 Moleküle pro 100 $Å^2$ Oberfläche der Teilchen vorliegt; und
(ii) einer sekundären oberflächenaktiven Substanz, wobei die sekundäre oberflächenaktive Substanz ein nichtionischer Emulgator mit einem HLB von weniger als 11 ist und wobei die sekundäre oberflächenaktive Substanz in der Emulsion in einer Konzentration vorliegt, die ausreichend ist, um 1,5 bis 15 Moleküle pro 100 $Å^2$ Oberfläche der Teilchen zur Verfügung zu stellen,

besteht und

(II) Ausbilden einer adsorbierten inneren Schicht, die im wesentlichen aus der sekundären oberflächenaktiven Substanz besteht, zwischen der diskontinuierlichen Phase und einer äußeren Schicht, die im wesentlichen aus einer Kombination der primären oberflächenaktiven Substanz und der sekundären oberflächenaktiven Substanz besteht, wobei die Kombination die wässrige Phase berührt.

**19.** Verfahren nach Anspruch 18, wobei die Konzentration der sekundären oberflächenaktiven Substanz 4 bis 15 Mo-leküle pro 100 $Å^2$ Teilchengröße beträgt und dadurch der Größenzuwachs der Teilchen minimiert wird, so dass die Teilchen in der Größe um nicht mehr als 10% anwachsen, nachdem die Emulsion mindestens 14 Tage lang bei etwa 25°C gelagert wird.

## Revendications

**1.** Emulsion aqueuse comprenant :

A) une phase continue comprenant de l'eau;
B) une phase discontinue comprenant au moins un alcoxy-silane non polaire comportant au moins un groupe organofonctionnel non polaire lié à un atome de silicium, dans laquelle la phase discontinue forme des particules dans la phase continue; et
C) un système d'émulsifiants formé essentiellement

(i) d'un agent tensioactif primaire choisi parmi les émulsifiants anioniques, les émulsifiants cationiques et les émulsifiants amphotères, dans lequel l'agent tensioactif primaire est présent dans l'émulsion à une concentration suffisante pour conférer 0,5 à 3 molécules d'agent tensioactif primaire par 100 angströms carrés d'aire superficielle des particules; et
(ii) un coagent tensioactif, dans lequel le coagent tensioactif est un émulsifiant non ionique ayant un HLB inférieur à 11, et dans lequel le coagent tensioactif est présent dans l'émulsion à une concentration suffisante pour conférer 1,5 à 15 molécules par 100 angströms carrés d'aire superficielle d'agent tensioactif des particules.

**2.** Emulsion suivant la revendication 1, dans laquelle l'alcoxysilane non polaire est présent à raison de 1 à 65% en poids de l'émulsion.

3. Emulsion suivant l'une ou l'autre des revendications 1 et 2, dans laquelle l'alcoxysilane non polaire a un poids moléculaire inférieur à 1.000.

4. Emulsion suivant l'une quelconque des revendications 1 à 3, dans laquelle l'alcoxysilane non polaire a la formule générale $R_nSiR'_{4-n}$, dans laquelle chaque R représente indépendamment un groupe alkyle, alkyle halogéné, aryle ou aryle substitué, R' représente un groupe alcoxy de 1 à 10 atomes de carbone et n est égal à 1 ou 2.

5. Emulsion suivant la revendication 4, dans laquelle R représente indépendamment un groupe alkyle de 8 à 20 atomes de carbone.

6. Emulsion suivant la revendication 4, dans laquelle R représente indépendamment un groupe alkyle de 1 à 7 atomes de carbone.

7. Emulsion suivant l'une quelconque des revendications 1 à 6, dans laquelle l'agent tensioactif primaire est un alkyl sulfonate linéaire de triéthanolamine anionique.

8. Emulsion suivant l'une quelconque des revendications 1 à 7, dans laquelle le coagent tensioactif a une valeur HLB inférieure à 9.

9. Emulsion suivant l'une quelconque des revendications 1 à 8, dans laquelle la concentration du coagent tensioactif est suffisante pour conférer 4 à 15 molécules de coagent tensioactif par 100 angströms carrés d'aire superficielle des particules.

10. Emulsion suivant l'une quelconque des revendications 1 à 9, dans laquelle les particules ont un diamètre moyen inférieur à 10 micromètres.

11. Emulsion suivant la revendication 10, dans laquelle le diamètre moyen est inférieur à 1 micromètre.

12. Emulsion suivant l'une quelconque des revendications 1 à 11, comprenant de plus un ou plusieurs composants facultatifs choisis parmi (D) un tampon, (E) un biocide, (F) un épaississant, (G) une fragrance, (H) un colorant, (I) un agent moussant, (J) un agent antimousse et (K) un additif antirouille.

13. Emulsion suivant la revendication 12, dans laquelle le tampon est un acide ou une base organique ou inorganique ou un sel d'une base organique ou inorganique.

14. Emulsion suivant l'une ou l'autre des revendications 12 et 13, dans laquelle le biocide est présent à raison de 0,1 à 5% en poids de la solution.

15. Emulsion suivant l'une quelconque des revendications 12 à 14, dans laquelle l'épaississant est de l'acide polyacrylique, un sel d'acide polyacrylique, un sel d'acide alginique, un ester d'acide alginique, de l'alcool polyvinylique, un polyéther, de la caséine, un mannane, de l'amidon, un chitosane, de la carboxyméthylcellulose ou de la méthoxyméthylcellulose.

16. Emulsion suivant l'une quelconque des revendications 12 à 15, dans laquelle le colorant est un colorant à base d'eau ou un colorant soluble dans l'huile.

17. Emulsion suivant l'une quelconque des revendications 12 à 16, dans laquelle l'additif antirouille est du benzoate de sodium.

18. Procédé comprenant :

(I) l'émulsification d'une composition comprenant :

A) une phase continue comprenant de l'eau;
B) une phase discontinue comprenant au moins un alcoxy-silane non polaire comportant au moins un groupe organofonctionnel non polaire lié à un atome de silicium, dans laquelle la phase discontinue forme des particules dispersées dans la phase continue; et
C) un système d'émulsifiants formé essentiellement

(i) d'un agent tensioactif primaire, dans lequel l'agent tensioactif primaire est choisi dans le groupe constitué des agents tensioactifs anioniques, des agents tensioactifs cationiques, des agents tensioactifs amphotères, et leurs combinaisons, et dans lequel l'agent tensioactif primaire est présent dans l'émulsion à une concentration de 0,5 à 3 molécules par 100 angströms carrés d'aire superficielle des particules; et

(ii) un coagent tensioactif, dans lequel le coagent tensioactif est un émulsifiant non ionique ayant un HLB inférieur à 11, et dans lequel le coagent tensioactif est présent dans l'émulsion à une concentration suffisante pour conférer 1,5 à 15 molécules par 100 angströms carrés d'aire superficielle d'agent tensioactif des particules; et

(II) la formation d'une couche intérieure adsorbée composée essentiellement du coagent tensioactif entre la phase discontinue et une couche extérieure composée essentiellement d'une combinaison de l'agent tensioactif primaire et du coagent tensioactif, dans lequel la combinaison est au contact de la phase aqueuse.

19. Procédé suivant la revendication 18, dans lequel la concentration en coagent tensioactif est de 4 à 15 molécules par 100 angströms carrés d'aire superficielle des particules, en minimisant ainsi une augmentation de taille des particules de telle sorte que les particules n'augmentent pas de taille de plus de 10% après que l'émulsion est conservée à environ 25°C pendant au moins 14 jours.